# EUROPEAN PATENT SPECIFICATION

(11) **EP 1 087 425 B1**
(45) Date of publication and mention of the grant of the patent: **28.03.2007**
(21) Application number: 98935436.0
(22) Date of filing: 19.06.1998
(51) Int. Cl.: H04L 9/06

(54) **METHOD FOR THE CRYPTOGRAPHIC CONVERSION OF BINARY DATA BLOCKS**
VERFAHREN ZUR KRYPTOGRAPHISCHEN UMWANDLUNG VON BINÄREN DATENBLÖCKEN
PROCEDE DE CONVERSION CRYPTOGRAPHIQUE DE BLOCS DE DONNEES BINAIRES

(30) Priority: 19.01.1998 RU 98100685
(43) Date of publication of application: 28.03.2001
(73) Proprietor: Otkrytoe Aktsionernoe Obschestvo " Moskovskaya Gorodskaya Telefonnaya Set", Moscow, GSP 103804 (RU); Moldovyan, Alexandr Andreevich, Vsevolozhsk, 188710 (RU); Moldovyan, Nikolay Andreevich, Vsevolozhsk, 188710 (RU)
(72) Inventor: MOLDOVYAN, Alexandr Andreevich, Vsevolozhsk, 188710 (RU); MOLDOVYAN, Nikolai Andreevich, Vsevolozhsk, 188710 (RU)
(74) Representative: Wardley, Diana Mary
(86) International application number: PCT/RU1998/000182
(87) International publication number: WO 1999/036942

(56) References cited:
- EP-A1- 0 202 989
- EP-A1- 0 676 876
- WO-A1-88/01119
- RU-C1- 2 097 931
- US-A- 5 001 754
- US-A- 5 548 648
- RIVEST R L: "The RC5 encryption algorithm" FAST SOFTWARE ENCRYPTION, SECOND INTERNATIONAL WORKSHOP, PROCEEDINGS, 1995, BERLIN, GERMANY, SPRINGER-VERLAG, GERMANY, 14 December 1994 (1994-12-14), pages 86-96, XP002286361 ISBN: 3-540-60590-8
- MOLDOVYAN N A ET AL: "Software oriented ciphers for computer communication protection" 4TH INT. CONF. ON APPLICATION OF COMPUTER SYSTEMS PROC. SZCZECIN - POLAND, 14 November 1997 (1997-11-14), XP002192427

## Description

The present invention relates to the field of electrical communications and computer technology and, more particularly, to the field of cryptographic methods and devices for ciphering of messages (information).

### Prior Art

The totality of features of the claimed method uses the following terms:
- secret key is binary information known only to the legitimate owner;
- cryptographic conversion is digital data conversion which allows the influence of source data bit on a plurality of output data bits, for example, for the purpose of protecting information from unauthorised reading, generating digital signature, generating modification detection code; some important types of cryptographic conversions are unilateral conversion, hashing and ciphering;
- information hashing is a certain method of forming a so-called hash-code of a fixed size (typically 128 bits) for messages of any size; hashing methods are widely used that are based on iterative hash functions using block mechanisms of information cryptographic conversion (see Lai X., Massey J.L. Hash Functions Based on Block Ciphers/ Workshop on the Theory and Applications of Cryptographic Techniques. EUROCRYPT'92, Hungary, May 24-28, 1992, Proceedings, p.53-66);
- ciphering is a information conversion process which depends on the secret key and which transforms a source text into a ciphered text representing a pseudo-random character sequence from which obtaining information without the knowledge of the secret key is practically unfeasible;
- deciphering is a process which is reverse to ciphering procedure; deciphering ensures recovering information according to the cryptogram when the secret key is known;
- cipher is a totality of elementary steps of input data conversion using the secret key; the cipher may be implemented in the form of a computer program or as a separate device;
- binary vector is a certain sequence of off-bits and on-bits, such as 1011010011; a specific structure of the binary vector may be interpreted as a binary number if it is assumed that position of each bit corresponds to a binary bit, i.e. the binary vector may be compared with a numerical value which is univocally determined by the binary vector structure;
- cryptanalysis is a method of calculating the secret key for obtaining unauthorised access to ciphered information or developing a method which provides access to the ciphered information without calculating the secret key;
- unilateral conversion is such a conversion of a L-bit input data block into an L-bit output data block which allows to easily calculate the output data block according to the input block, while calculation of the input block which would transform into randomly selected output block is an essentially impracticable task;
- unilateral function is a function the value of which is easily calculated according to a given argument, however, calculating the argument according to a given function value is a computationally difficult problem; unilateral functions are implemented as a procedural sequence of unilateral conversion of a certain input block (argument), the output value of which is assumed as the function value;
- cryptographic resistance is a measure of safety of ciphered information protection and represents labour intensity measured in the number of elementary operations to be performed in order to recover information according to a cryptogram when the conversion algorithm is known but without the knowledge of the secret key; in the case of unilateral conversions, by cryptographic resistance is meant complexity of calculating of the input block value according to its output value;
- cyclic shift operations depending on converted subblocks or depending on a binary vector are operations of cyclic shift on a number of bits set by the subblock value or by the binary vector value; operations of cyclic shit to the left (right) are designated with the sign "<<<"(">>>"), for example, the notation B₁<<<B₂ signifies an operation of cyclic shift to the left of subblock B₁ on the number of bits equal to the value of binary vector B₂; similar operations are basic for the RC5 cipher;
- single-site operation is an operation performed on one operand (data block or binary vector); the subblock value after performing a certain given single-site operation depends only on initial value; an example of the single-site operations are operations of addition, subtraction, multiplication, etc.
Methods are known of block ciphering of data, see, e.g., US standard DES (National Bureau of Standards. Data Encryption Standard. Federal Information Processing Standards Publication 46, January 1977). This method of data block ciphering comprises generating a secret key, splitting the data block being converted into two subblocks L and R and alternate changing the latter by carrying out the operation of bit-for-bit modulo 2 summation on the subblock L and a binary vector which is generated as an output value of a certain function F according to the value of subblock R. Thereupon the blocks are interchanged. Function F in this method is implemented by performing the transposition and stuffing operations carried out on subblock R. This method has a high conversion rate when realised in the form of a specialised electronic circuitry.

Moldovyan A.A., Moldovyan N.A., Sovetov B.Ya., Software-Oriented Ciphers for Computer Communication Protection, 4th Int. Conf. APPLICATIONS OF COMPUTER SYSTEMS ACS '97, November 13-14, 1997, Szczecin, Poland, Proc. p.p.443-450, discloses a method of data block ciphering comprising generating an expanded key, splitting the data block being converted into a set of N 32-bit subblocks, data-dependent subkey selection, and alternate changing of subblocks by carrying out addition operations on subblocks and subkeys and performing on an i-th subblock rotation an operation that conserves the initial sequence of bits of the i-th subblock, where i ≤ N, depending on the j-th subblock, where j ≤ N.

However, the known closest prior art method uses a secret key of a small size (56 bits) which makes it vulnerable to cryptanalysis based on finding a key to fit it. The latter is associated with high computer power of modem mass-use computers.

The closest by its technical essence to the claimed method for cryptographic conversion of binary data blocks is the method implemented in the cipher RC5 and described in the work (R.Rivest, The RC5 Encryption Algorithm/Fast Software Encryption, second International Workshop Proceedings (Leuven, Belgium, December 14-16, 1994), Lecture Notes in Computer Science, v.1008, Springer-Verlag, 1995, pp.86-96). The closest prior art method comprises generating a secret key in the form of a totality of subkeys, splitting an input data block into subblocks A and B, and alternate subblock conversion. The subblocks are transformed by performing on them single-site and dual-site operations. As dual-site operations, modulo 2ⁿ addition operations are used, where n=8, 16, 32, 64 and a modulo 2 bit-for-bit summing operation. As the single-site operation, an operation of cyclic shift to the left is used, whereby the number of bits on which the subblock being converted is shifted depends on the value of another subblock, this determines dependency of the cyclic shift operation at the current step of subblock conversion on the initial value of the input data block. The dual-site operation is performed on a subblock and subkey as well as on two subblocks. Characteristic of the closest prior art method is the use of cyclic bit shift operation of one of subblocks depending on the value of another subblock.

A subblock, for example subblock B, is converted as follows. A modulo 2 bit-for-bit summing operation ("⊕") is performed on subblocks A and B and the value obtained following this operation is assigned to subblock B. This is written as a relation:

B ← B ⊕ A,

where the sign "←" signifies the assignment operation. After that, the operation of cyclic shift on the number of bits equal to the value of subblock A is performed on subblock B:

B ← B <<< A.

Then the modulo 2ⁿ summing operation is performed on the subblock and one of subkeys S: By ← (B + S) mod 2ⁿ, where n is the subblock length in bits. After this, subblock A is converted in the similar way. Several such conversion steps are performed for the both subblocks.

This method provides high encryption rate when implemented in the form of a computer program or in the form of electronic ciphering devices. However, the closest prior art has some disadvantages, namely, it fails to ensure high resistance of cryptographic data conversion to differential and linear cryptanalysis (Kaliski B.S., Yin Y.L. On Differential and Linear Cryptanalysis of the RC5 Encryption Algorithm. Advances in Cryptology-CRYPTO'95 Proceedings, Springer-Verlag, 1955, pp.171-184). This disadvantage is due to the fact that effectiveness of the use of operations dependent on data being converted, with the aim of enhancing ciphering resistance to known cryptanalysis methods, is reduced by the fact that the number of potentially realisable versions of cyclic shift operations is equal to the number of binary bits of subblock n and does not exceed 64. This disadvantage is also due to the fact that the cyclic shift operation is a rotation operation that conserves the initial sequence of bits of the converted subblock.

The basis of the invention is formed by the task to develop a method of is cryptographic conversion of binary data blocks, wherein input data conversion would be effected in such a manner as to provide the increase in the number of various versions of an operation which depends on the block being converted due to which resistance to differential and linear cryptanalysis is increased.

### Disclosure of the Invention

According to the present invention, there is provided a method for cryptographic conversion of binary data blocks comprising splitting said data blocks into N ≥2 subblocks, sequentially converting said blocks by performing on the i-th subblock, where i ≤ N, at least one conversion operation dependent on the value of j-th subblock, characterised in that an operation of transposing bits of the i-th subblock is used as the operation dependent on the value of the j-th subblock, where j ≤ N, and in that the said operation of transposing bits of the i-th subblock is not a rotation.

Due to such solution, the number of possible versions of the j-th subblock value dependent operation is increased which enables to enhance cryptographic conversion resistance to differential and linear cryptanalysis.

A novel feature is also that the transposition operation of the bits of the i-th subblock which depends on the value of the j-th subblock is formed depending on a secret key before the beginning of the i-th subblock conversion.

Due to such solution, modification of the transposition operation of the bits of the i-th subblock which depends on the value of the j-th subblock is not predetermined which provides additional enhancement of cryptographic conversion resistance to differential and linear cryptanalyses and allows to reduce the number of conversion operations and thereby to increase ciphering rate.

A novel feature is also that before performing current operation of transposing of the bits of the i-th subblock which depends on the j-th subblock, a binary vector V is additionally generated, while the transposition operation of the bits of the i-th subblock is performed depending on the value of V, whereby the binary vector is generated depending on its value at the time of performing the previous conversion step for one of subblocks and on the value of the j-th subblock.

Due to such solution, additional enhancement of cryptographic resistance is provided to attacks based on break-downs of the ciphering device.

Below the essence of the invention will be clarified in more detail by way of its embodiments with references to attached drawings.

### Brief Description of the Drawings

Fig. 1 presents a generalised diagram of cryptographic conversion according to the claimed method.
Fig.2 schematically presents the structure of controlled transposition block.
Fig.3 represents the structure of controlled transposition block having a 32-bit information input.
Fig.4 presents a block diagram of elementary switch.
Fig.5 presents a table of input and output signals of the elementary switch when u=1 is control signal.
Fig.6 presents a table of input and output signals of the elementary controlled switch when the value of the control signal is u=0.

### Best Embodiments of the Invention

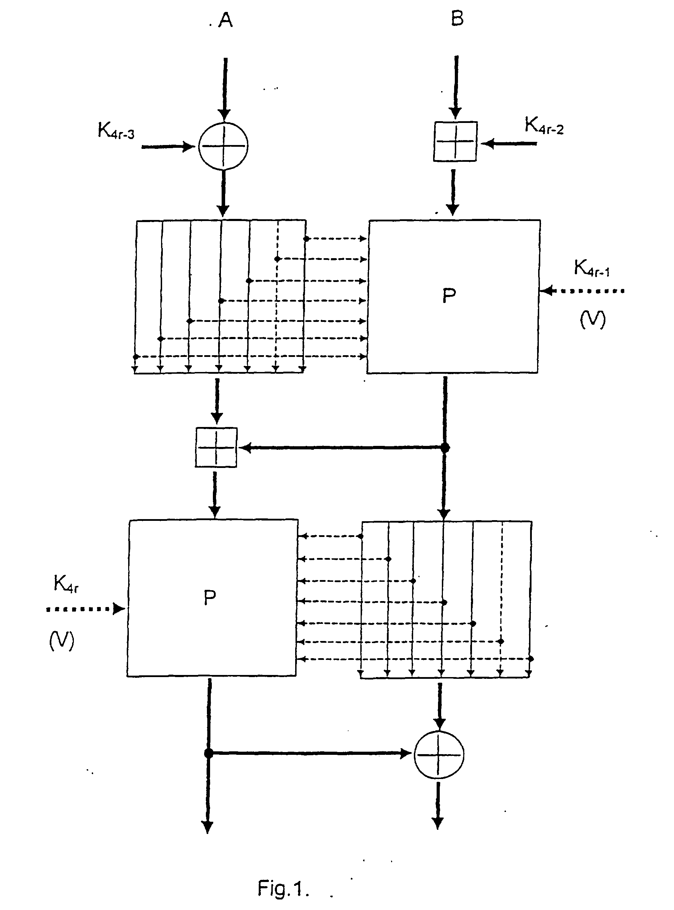

The invention is explained with a generalised diagram of data block conversion based on the claimed method which is shown in Fig. 1,
where: P is the controlled transposition block; A and B are converted n-bit subblock; K₄ᵣ, K₄ᵣ₋₁, K₄ᵣ₋₂, K₄ᵣ₋₃ are n-bit secret key elements (n-bit subkeys); V is binary vector generated depending on input data; ⊕ symbol signifies modulo 2 bit-for-bit summing operation; ⊗ sign denotes modulo n summing operation, where n is the data subblock length in bits. Bold solid lines designate the n-bit signal transmission bus, thin solid lines signify transmission of one bit, thin dotted lines signify transmission of one control bit. Bold dotted lines signify n control signal transmission bus, n control signals being subkeys bits or binary vector bits. Using the subkey bits as control signals ensures forming a specific modification of subblock bit transposition operation dependent on the value of an input block which additionally enhances resistance of cryptographic conversion.

Fig.1 shows one round of conversions. Depending on a specific implementation of controlled transposition block and the required conversion rate, from 2 to 16 and more rounds may be set. This scheme of cryptographic conversion procedures may be used ciphering and for unilateral conversions. In the latter case, the secret key is not used, and instead of subkey signals, the control input of the block P is fed with signals of the binary vector V generated depending on the value of subblocks being converted at intermediate conversion steps. When ciphering, the same four n-bit subkeys K₄, K₃, K₂ and K₁ may be used in carrying out each ciphering round. In this case, when the typical subblock size is n=32, the secret key length is 128 bits. When secret key of a larger size is employed, each round may use K₄ᵣ, K₄ᵣ₋₁, K₄ᵣ₋₂ and K₄ᵣ₋₃. For example, when the round number is r=3, the first round uses subkeys K₄, K₃, K₂, and K₁, the second round uses subkeys K₈, K₇, K₆ and K₅, the third round uses subkeys K₁₂, K₁₁, K₁₀ and K₉.

The possibility of technical implementation of the claimed method is explained with its following specific embodiments.

### Example 1.

This example relates to the use a method for ciphering data. The secret key is presented in the form of four subkeys K₄ᵣ, K₄ᵣ₋₁, K₄ᵣ₋₂, and K₄ᵣ₋₃. One ciphering round is described by the following procedural sequence:
1. Convert subblock A according to expression:

   A ← A ⊕ K₄ᵣ₋₃,

   where "←" is designation of assignment operation.
2. Convert subblock B according to expression:

   B ← B ⊗ K₄ᵣ₋₂.
3. Depending on the value of subblock A and on subkey K ₄ᵣ₋₁, to effect transposition of bit of subblock.
4. Convert subblock A according to expression:

   A ← A ⊗ B.
5. Depending on the value of subblock B and on subkey K ₄ᵣ, effect transposition of bits of subblock A.
6. Convert subblock B according to expression:

   B ← B ⊕ A,

### Example 2.

This example describes one round of unilateral conversions according to the following procedural sequence:
1. Generate binary vector V:

   V ← <<< B.
2. Convert subblock B according to expression:

   B ← B ⊗ V.
3. Generate binary vector V depending on its value at the previous step and on the values of subblocks A and B according to formula:

   V ← (V<<<A) ⊕ (B<<<13).
4. Convert subblock A according to expression:

   A ← A ⊕ V.
5. Depending on the values of A and V, effect transposition of bits of subblock B.
6. Convert subblock A according to expression:

   A ← A ⊗ B.
7. Generate binary vector V:

   V ← (V<<<B) ⊕ (A<<<11).
8. Depending on the values B and V effect transposition of bits of subblock A.
9. Convert subblock B according to expression:

   B ← B ⊕ A.

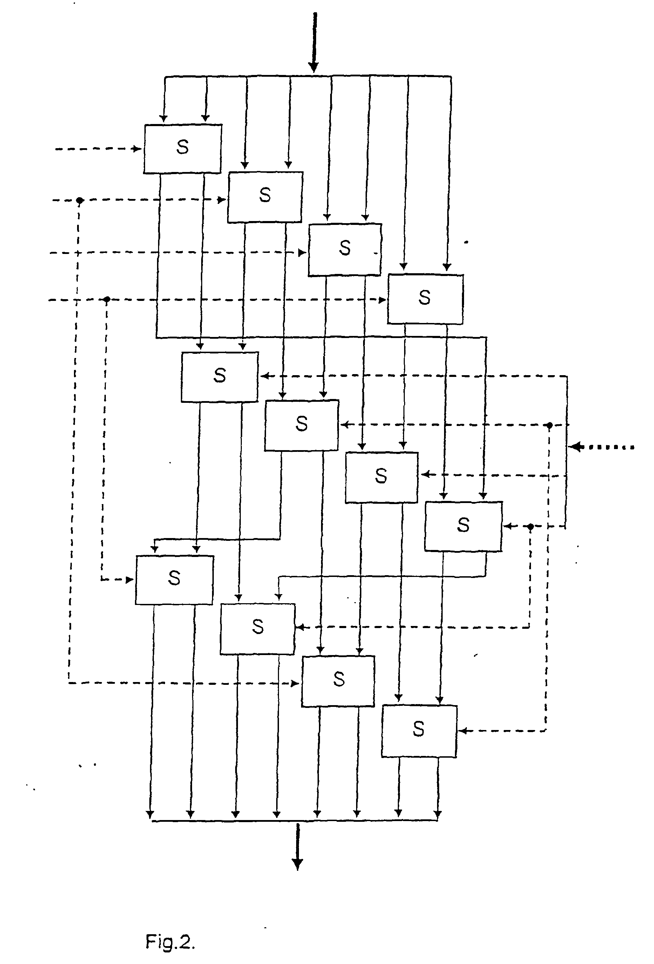

Fig.2 shows a possible embodiment of the controlled transposition block using the totality of elementary switched S. This embodiment corresponds to the block P having 8-bit input for data signals and 8-bit input for control signals designated with dotted lines similar to designation in Fig.1.

The number of various versions of the transposition operation is equal to the number of possible code combinations at the control input and is 2⁸ = 256 for the block P with the structure presented in Fig.2, which exceeds the number of cyclic shift operations used in the closest prior art method. Using the similar method, it is possible to make up the scheme for block P with an arbitrary size of data input and control signal input, in particular, for block P with 32-bit data input and 32-bit control signal input. In the latter case, the number of different variations of transposition operation equal to 2³² > 10⁹ is achieved.

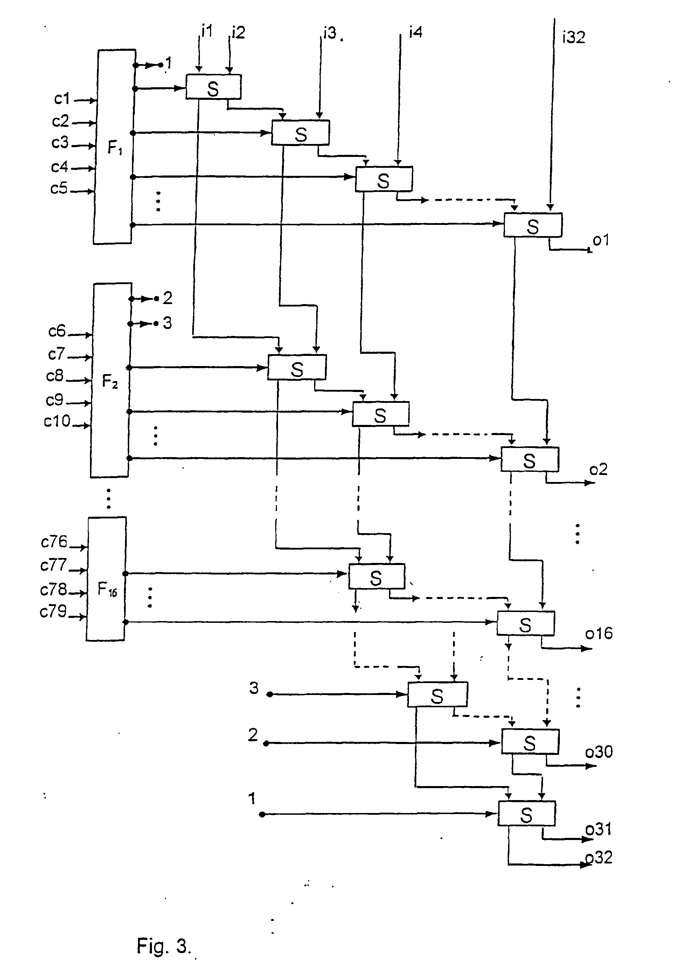

Fig.3 shows the structure of controlled transposition block having 32-bit data input and 79-bit control input. This controlled transposition block implements a unique transposition of input binary bits for each possible value of code combination at the control input the number of which is 2⁷⁹. External information inputs of the controlled transposition block are designated i1, i2,...., i32, external outputs are designated o1, o2,.....,o32, control inputs are designated c1, c2,...., c79. Elementary switches S are connected in such a way as to form a matrix consisting from 31 lines. In the first line, 31 elementary switches are connected, in the second line, 30, in the third line, 29, etc. In each subsequent line, the number of elementary switches is reduces by 1. In the lowest line 31, 1 elementary switch is connected.

The number j = 31 line has 33-j inputs, 33-j outputs and 32-j control inputs. The last (rightmost) output of the j-th line is an external output of the controlled transposition block, the remaining 32-j outputs of the j-line are connected to the corresponding inputs of the (j+1)-th line. The last 31 line has two outputs and both of them are external outputs of the controlled transposition block. A unitary (u=1) control signal is supplied to not more than the control input of each line. Binary-32-order decipherers F₁, F₂,....,F₁₅ and binary-16-order decipherer F₁₆ serve to meet this requirement. Decipherers F₁, F₂,...., F₁₅ have five external control inputs to which an arbitrary 5-bit binary code is supplied, and 32 outputs. The decipherers generate a unitary signal only at one output. A zero signal is set at the remaining 31 outputs. Decipherer F₁₆ has 4 inputs to which an arbitrary 4-bit binary code is supplied, and 16 outputs only at one of which a unitary signal is set. For all decipherers, F₁, F₂,....., F₁₅ and F₁₆, each input binary code value defines a uniquely possible output number at which the unitary signal (u=1) is set.

A part of decipherer Fₕ outputs, where h ≤15, are connected to control inputs of the h-th line (32-h inputs), while a part of outputs are connected to control inputs of the (32-h)-th line (the remaining h decipherer outputs). The control signal u=1 is set at each line on not more than one elementary switch. The line input connected to the right input of elementary switch to which a unitary control signal is supplied is commuted with the external output of the controlled transposition block corresponding to this line. If the unitary control signal is fed to the leftmost elementary switch, then the external output of the controlled transposition block (block P) is commuted with the leftmost line input. The first line commutes one of the external inputs i1, i2,....., i32 of the block P with the external output o1, while the remaining 31 external inputs commute with the inputs of the second line. The second line commutes on of the remaining 31 of the external input with the external output o2, while the remaining 30 external inputs commute with the inputs of the 3^{rd} line, and so on. Such structure of the block P implements the unique transposition of input bits for each value of binary code supplied to the 79-bit control input of the block P.

For example, the following version of using the control 79-bit input in the cryptographic conversion scheme, shown in Fig. 1, is possible. 32 bits are used as control signals, for example, of subblock B, and 47 bits of the secret key. As the latter, for example, 32 bits of subkey K₄ᵣ₋₁ and 15 bits of subkey K ₄ᵣ₋₂ may be used. In this case, when the secret key is entered into the ciphering device, depending on these secret key 47 bits, one of 2⁴⁷ different modifications of the bit transposition operation is generated which depends on the input block value. Here each modification of this operation includes 2³² of different operations of transposing bits of subblock A selection of which is determined by the value of subblock B. Modification selection is not predetermined since it is determined by the secret key. This additionally enhances resistance of the cryptographic conversion. If the ciphering device employs 4 blocks P having the structure shown in Fig.3, then the number of possible combinations of modifications of the transposition operations being set on clocks P depending on the secret key, may be set up to (2⁴⁷)⁴ = 2¹⁸⁸ using the secret key with a length not less than 188 bits.

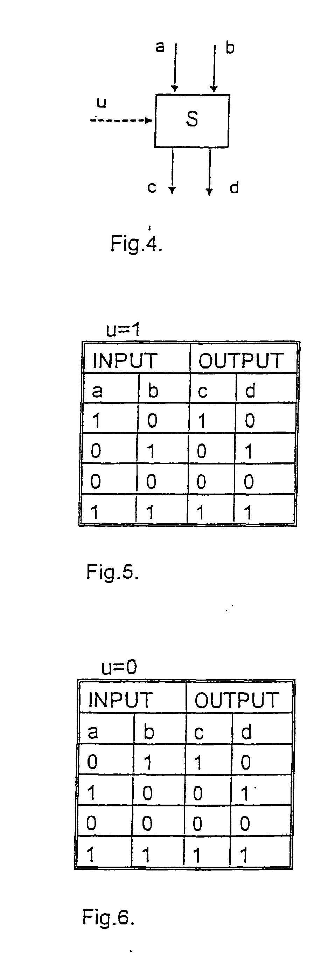

Fig.4 clarifies the operation of the elementary switch where u is control signal, a and b are input data signals, c and d are output data signals.

Tables in Fig.5 and 6 demonstrate dependency of output signals on input and control signals. It is apparent from these tables that when u=1, line a is commuted with line c, and line b with line d. When u=0, line a is commuted with line d, and line b with line d.

Due to the simple structure, the modem planar technology of manufacturing integrated circuits allows to easily produce cryptographic microprocessors comprising controlled transposition blocks with the input size of 32 and 64 bits.

The above examples show that the proposed method for cryptographic conversions of binary data blocks is technically feasible and enables to solve the problem that has been set.

### Industrial Applicability

The claimed method may be realised, for example, in specialised cryptographic microprocessors providing ciphering rate in the order of 1 Gbit/s which is sufficient for ciphering in the real time data transmitted over high-speed fibre optic communication channels.

## Claims

1. A method for cryptographic conversion of binary data blocks comprising splitting said data blocks into N ≥2 subblocks, sequentially converting said blocks by performing on the i-th subblock, where i ≤ N, at least one conversion operation dependent on the value of a j-th subblock, **characterised in that** an operation of transposing bits of the i-th subblock is used as the operation dependent on the value of the j-th subblock, where j ≤ N, and **in that** the said operation of transposing bits of the i-th subblock is not a rotation.

2. A method according to claim 1, **characterised in that** said operation of transposing bits of said i-th subblock which depends on the value of j-th subblock is generated depending on a secret key before the beginning of i-th subblock conversion.

3. A method according to claim 1, **characterised in that** before performing the current operation of transposing bits of said i-th subblock which depends on the value of said j-th subblock, a binary vector V is additionally generated, said operation of transposing bits of said i-th subblock being performed depending on the V value, whereby said binary vector is generated depending on its value at the time of performing the preceding step of converting one of said subblocks and depending on the j-th subblock value.

## Patentansprüche

1. Verfahren zur kryptographischen Umwandlung von binären Datenblöcken, bei dem die Datenblöcke in N≥2 Unterblöcke geteilt werden, die Blöcke sequentiell umgewandelt werden, indem an dem i-ten Unterblock, wobei i ≤ N ist, wenigstens eine Umwandlungsoperation, welche von dem Wert eines j-ten Unterblocks abhängig ist, durchgeführt wird, **dadurch gekennzeichnet, daß** eine Operation des Transponierens von Bits des i-ten Unterblocks verwendet wird als die Operation, welche von dem Wert des j-ten Unterblocks abhängig ist, wobei j ≤N ist, und die Operation des Transponierens von Bits des i-ten Unterblocks keine Rotation ist.

2. Verfahren nach Anspruch 1, **dadurch gekennzeichnet, daß** die Operation des Transponierens von Bits des i-ten Unterblocks, welcher von dem Wert des j-ten Unterblocks abhängig ist, in Abhängigkeit von einem geheimen Schlüssel vor dem Beginn der Umwandlung des i-ten Unterblocks erzeugt wird.

3. Verfahren nach Anspruch 1, **dadurch gekennzeichnet, daß**, bevor die eigentliche Operation des Transponierens von Bits des i-ten Unterblocks, welcher von dem Wert des j-ten Unterblocks abhängig ist, durchgeführt wird, zusätzlich ein binärer Vektor V erzeugt wird und die Operation des Transponierens von Bits des i-ten Unterblocks in Abhängigkeit von dem V-Wert durchgeführt wird, wobei der binäre Vektor in Abhängigkeit von seinem Wert zu dem Zeitpunkt des Durchführens des vorangegangenen Schrittes der Umwandlung von einem der Unterblöcke und in Abhängigkeit von dem Wert des j-ten Unterblockes erzeugt wird.

## Revendications

1. Procédé de conversion cryptographique de blocs de données binaires comprenant la séparation desdits blocs de données en N ≥ 2 sous-blocs, le fait de convertir séquentiellement lesdits blocs en exécutant sur le i^{e} sous-bloc, où i ≤ N, au moins une opération de conversion en fonction de la valeur d'un j^{e} sous-bloc, **caractérisé en ce qu'**une opération de transposition de bits du i^{e} sous-bloc est utilisée en tant qu'opération dépendant de la valeur du j^{e} sous-bloc, où j ≤ N, et **en ce que** ladite opération de transposition de bits du i^{e} sous-bloc n'est pas une rotation.

2. Procédé selon la revendication 1, **caractérisé en ce que** ladite opération de transposition de bits dudit i^{e} sous-bloc qui dépend de la valeur du j^{e} sous-bloc est générée en fonction d'une clé secrète avant le commencement de la conversion du i^{e} sous-bloc.

3. Procédé selon la revendication 1, **caractérisé en ce que**, avant d'exécuter l'opération en cours de transposition de bits dudit i^{e} sous-bloc qui dépend de la valeur dudit j^{e} sous-bloc, un vecteur binaire V est en outre généré, ladite opération de transposition de bits dudit i^{e} sous-bloc étant exécutée en fonction de la valeur V, grâce à quoi ledit vecteur binaire est généré en fonction de sa valeur au moment d'exécuter l'étape précédente de conversion de l'un desdits sous-blocs et en fonction de la valeur du j^{e} sous-bloc.
